# EUROPEAN PATENT SPECIFICATION

(11) **EP 4 076 890 B1**
(45) Date of publication and mention of the grant of the patent: **07.01.2026**
(21) Application number: 20833975.4
(22) Date of filing: 18.12.2020
(51) Int. Cl.: B29C 45/37, B29C 45/00, A47J 36/02, A47J 27/21, A47J 37/08, A47G 19/12, B29C 45/33, B29C 33/00, B29C 45/16, A47J 47/14, B29L 16/00, B29L 31/00

(54) **METHOD AND APPARATUS FOR THE PRODUCTION OF A COMPONENT MADE OF PLASTIC MATERIAL, AND COMPONENT MADE OF PLASTIC MATERIAL**
VERFAHREN UND VORRICHTUNG ZUR HERSTELLUNG EINES BAUTEILS AUS KUNSTSTOFF UND BAUTEIL AUS KUNSTSTOFF
PROCÉDÉ ET APPAREIL DE FABRICATION D'UN ÉLÉMENT EN MATIÈRE PLASTIQUE, ET ÉLÉMENT EN MATIÈRE PLASTIQUE

(30) Priority: 20.12.2019 IT 201900025108
(43) Date of publication of application: 26.10.2022
(73) Proprietor: De' Longhi Appliances S.r.l. Con Unico Socio, 31100 Treviso (IT)
(72) Inventor: MAZZON, Renzo, 31100 TREVISO (IT); VISENTIN, Silvio, 31100 TREVISO (IT)
(74) Representative: Petraz, Gilberto Luigi
(86) International application number: PCT/IT2020/050314
(87) International publication number: WO 2021/124370

(56) References cited:
- EP-A1- 2 079 640
- EP-A2- 0 055 174
- EP-A2- 0 465 356
- EP-A2- 1 825 985
- EP-B1- 0 055 174
- EP-B1- 0 465 356
- EP-B1- 2 079 640
- AU-A4- 2009 100 256
- JP-A- H01 249 336
- US-A1- 2001 027 140
- US-A1- 2002 070 224
- US-A1- 2008 078 372
- US-A1- 2015 158 219
- US-A1- 2018 290 419

## Description

### FIELD OF THE INVENTION

Embodiments described here concern a method and an apparatus for the production of a component having a body comprising two overlapping layers of plastic material.

The component in particular is suitable to be used as a containing body, or casing, of a household appliance, such as for example a kettle, a toaster, a vacuum cleaner, a coffee machine, a blender, an iron, or suchlike.

The present invention, also, concerns a household appliance, or a receptacle, comprising this component.

### BACKGROUND OF THE INVENTION

In the field of household appliances it is known to produce components, or finished objects, having two or more layers of plastic material at least partly overlapping each other, in order to provide a determinate aesthetic appearance. These components can be used to form the external structure of articles, or objects, such as for example but not limited to, household appliances for home use, or also carafes, bowls, and suchlike.

The ever increasing focus on aesthetic research in the design and production of household appliances for home use to satisfy the tastes of consumers is also known, providing an aesthetic appearance that is attractive, recognizable, and which allows to stand out from similar solutions on the market.

For example, components are known that define the containing body of a kettle, comprising a first layer of transparent plastic material and a second layer of metal material on which a plurality of through holes are made, through which the first layer and therefore the inside of the kettle itself is visible.

This solution, however, requires the first layer and the second layer to be made separately, and then coupled and connected to one another, with consequent problems of reciprocal coupling and seal.

This aesthetic research has also led to the production of household appliances with an external structure made of plastic material consisting of two layers overmolded one on the other in a single body.

Methods to produce components of household appliances are also known, which provide to inject a first layer of plastic material and subsequently a second layer of plastic material. For example, the first injected layer can be of transparent material while the second layer can be of colored and/or opaque material.

In particular, the second layer of material can be injected only partly with respect to the totality of the external surface of the component to be obtained, so as to keep the first injected layer, at least partly, visible in order to give the final product a pleasant and sought after aesthetic appearance. Or the first layer of injected material can be colored and/or opaque and the second layer can be of transparent, or semi-transparent material, so as to make the underlying layer of injected material visible.

Or the material to be used has technical characteristics of the mechanical and/or thermal and/or aesthetic type that do not make it suitable for contact with foodstuffs and therefore cannot be used for the first layer.

Articles are also known, such as for example bowls or cutlery handles, comprising a first layer of material, which is completely covered by a second layer of material, wherein the first layer has a greater thickness than the second layer, and acts as a structural component, while the second layer acts as an aesthetic surface finish.

The overmolding of the second layer of material on the first layer of material can be problematic. In fact, during the overmolding of the second layer on the first layer so-called "washing" phenomena of the first layer can occur, with consequent aesthetic problems, which are particularly visible if the external layer is at least partly transparent.

The overmolding of material can be even more complex in case it is desirable to produce a component in which the external layer, instead of having a substantially uniform thickness, as provided in the known solutions, has a substantially three-dimensional surface finish, with an alternation of protruding portions with a greater thickness, and recessed portions with a smaller thickness.

Because of this variation in thickness, in fact, during the injection of the second material between the first layer and the matrix of the mold to make the second layer, joint lines could form due to the different speed of advance of the material in the mold and therefore the different filling speed thereof.

Furthermore, the different speed of advance of the material and therefore the non-homogeneous and uneven flow can also lead to a difference between the cooling speeds, therefore a non-homogeneous cooling, in the different portions which have a different thickness to each other. This non-homogeneous cooling of the second layer of material can cause the formation of structural and aesthetic defects, such as joint lines, on the surface of the second layer or deformations.

Furthermore, it can cause a second, unwanted, melting of the underlying layer of material previously injected, in the zones where the cooling speed is lower.

In addition, a further disadvantage of the state of the art is that this non-homogeneous and uneven filling can lead to the formation of air bubbles inside the volume of the second layer, which can be unaesthetic and even compromise the solidity of the molded component.

Document US 2018/0290419 A1 describes a panel for manufacturing a seating surface of a chair, comprising a base layer provided with a first and a second face, the base layer being enclosed between a first external layer and a second external layer, wherein each face of the base layer has portions protruding toward the outside, which extend through respective apertures provided on the external first layer and second layer.

US 2001/027140 A1 describes a golf ball in which there are provided an external layer and at least one internal layer in contact with the external layer, both having a surface provided with protruding and recessed portions, wherein the internal layer has a thickness greater than the external layer and the depth of the respective protruding and recessed portions in the two layers is substantially the same. These protruding and recessed portions have the purpose of guaranteeing better hold between the two layers.

There is therefore the need to develop a method and an apparatus for the production of a component made of plastic material suitable to form a containing body, or a casing of a household appliance, that can overcome at least one of the disadvantages of the state of the art.

Another purpose is to provide a method and an apparatus for the production of a component made of plastic material that are fast and allow high productivity and efficiency.

Another purpose is to perfect a method and an apparatus which allow to produce a component with a three-dimensional surface finish, preventing the formation of joint lines between portions with different thicknesses.

Another purpose of the invention is to develop a method for the production of components which allows to obtain portions of the external surface of the finished product with variable thickness and a pleasant aesthetic effect.

Another purpose is to obtain completely transparent areas such as windows and/or lenses in order to have visibility inside the product or of control instruments, guaranteeing at the same time the seal and therefore preventing the leakage of liquids, vapours, dusts.

The Applicant has studied, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, the present invention concerns a method and an apparatus to produce a component made of plastic material suitable to make up the containing body, the casing, the shell, the external structure and/or the external body, or at least part thereof, of household appliances for home use.

Examples of application of the component according to the invention can be, for example, household appliances such as a kettle, toaster, vacuum cleaner, electric brushes, blenders, microwave ovens, electric ovens, fryers, teapots, coffee machines, ice cream machines, kneading machines, hair dryers, irons and suchlike.

The component according to the invention has, on its external surface, portions with a variable thickness, which confer a three-dimensional appearance which has a high aesthetic and recognition value.

A component according to the invention comprises a body made of plastic material comprising a first internal layer of a first material and a second external layer of a second material, which at least partly covers the first internal layer.

According to some embodiments, the second layer completely covers the first layer.

According to the invention, the second layer comprises an external surface having a three-dimensional finish comprising an alternation of protruding portions and recessed portions.

According to the invention, the first layer comprises, made in its thickness, channels, or filling cavities correlated to the shape and position of the recessed portions of the second layer, suitable to compensate, at least partly, for the difference in thickness between the protruding portions and the recessed portions.

Thanks to the presence of the channels, or filling cavities, the second layer, therefore, has a substantially uniform thickness, or with small deviations with respect to a nominal average value, allowing to obtain a pleasant final aesthetic effect.

The first layer defines an internal surface of the component.

According to some embodiments, the internal surface can have a smooth, uniform development, that is without notches and/or protrusions.

According to some embodiments, the component can have a tubular shape, with a circular, polygonal, oval section, or having a perimeter comprising a combination of straight segments and curved segments. Furthermore, the component can have along an axial development a constant section, or a variable section, with concave or convex portions.

According to some embodiments, the first material can be opaque, or have a color, or a plurality of colors, while the second material can be at least partly transparent, allowing the first opaque layer to be visible through it. This allows to confer a three-dimensional and partly convex appearance on the final component.

According to other embodiments, the second transparent layer extends, at least in an axial direction, beyond an end edge of the first opaque layer. In this way, the component has a transparent peripheral strip, which confers an effect of transparency and lightness.

According to some embodiments, the external surface of the component can have a surface finish with vertical, or inclined, ribs, or a spiral-shaped development.

According to alternative embodiments, the external surface can have a bubble or diamond surface finish, or with other geometric or non-geometric shapes, such as for example flowers, or suchlike.

The present invention also concerns a method for producing a component made of plastic material, which provides:
- a first step of injecting a first plastic material into a first molding volume defined between a punch and a first matrix to make a first layer;
- a second step of injecting a second plastic material into a second molding volume defined between the first layer obtained in the first step and a second matrix, in order to make a second layer having an external surface provided with a three-dimensional finish, comprising an alternation of protruding portions and recessed portions.

According to the present invention, during the first injection step, the method provides to make, on the first layer, channels, or filling cavities, correlated to the shape and position of the recessed portions of the second layer, and suitable to compensate for the difference in thickness between the protruding portions and the recessed portions, so as to obtain, in the second injection step, a substantially uniform filling flow of the second material.

In particular, the filling cavities obtained during the production of the first layer allow to obtain, in the second injection step, a molding volume having a width that is substantially constant, or at least variable, with small deviations from a constant average value.

According to some embodiments, the method provides to make the second external layer with a thickness greater than the first internal layer. This allows to obtain a lower resistance to the filling flow of the second material and therefore reduce the so-called shear stress phenomena of the material, preventing the formation of possible aesthetic defects caused by the mechanical friction of the material due to rubbing against the wall of the mold and the material of the first layer.

The present invention also concerns an apparatus for the production of a component made of plastic material of the type described above, which comprises:
- a first molding assembly, comprising a punch and a first matrix suitable to define a first molding volume between them, and an injection device configured to inject a first plastic material into the first molding volume to obtain a first layer;
- a second molding assembly, comprising a second matrix having a molding surface provided with an alternation of recessed portions and protruding portions and configured to define, in negative, the shape of the external surface of the component, and suitable to define, together with the first layer of material, a second molding volume, and a second injection device configured to inject a second plastic material into the second molding volume and obtain a second layer.

According to the present invention, the first matrix comprises a molding surface provided with at least one portion having protruding reliefs, during use, inside the first molding volume, and configured to define, in the first layer of material, filling channels or cavities correlated to the shape and position of the recessed portions of the second layer.

The molding cavities are able to define, in negative, the shape of the recessed portions of the external surface of the second layer of the component, so as to obtain a second molding volume with a substantially uniform width suitable to facilitate the advance of the second layer of material, preventing the formation of possible joint lines.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a schematic view of a component in accordance with one embodiment of the present invention, applied to a household appliance, in the example case a kettle;
- fig. 2 is a section view of fig. 1 along the section line II-II;
- fig. 3 is an enlarged detail of a portion of fig. 2;
- fig. 4 is a schematic view of a component in accordance with another embodiment of the present invention applied to a different household appliance, in the example case a toaster;
- fig. 4a is a three-dimensional view of a detail of a component according to the invention in accordance with other embodiments;
- fig. 4b is a three-dimensional view of a portion of the component according to another embodiment;
- fig. 4c is a three-dimensional view of a portion of the component according to another embodiment;
- fig. 5 is a schematic view of an apparatus for the production of a component made of plastic material according to some embodiments;
- fig. 6 is a vertical section view of a component according to the invention at the end of a first step of injecting a first material;
- fig. 7 is a vertical section view of a component according to the invention at the end of a second step of injecting a second material;
- fig. 8 is an enlarged detail of the apparatus of fig. 5 during the first injection step;
- fig. 9 is a section view of the apparatus of fig. 5 along the section line IX-IX;
- fig. 9a is an enlarged detail of fig. 9;
- fig. 10 is a section view along the line X-X in fig. 6;
- fig. 11 is a section view of the apparatus of fig. 5 along the section line XI-XI;
- fig. 12 is a section view along the line XII-XII of fig. 7.

### DESCRIPTION OF EMBODIMENTS

We will now refer in detail to the possible embodiments of the invention, of which one or more examples are shown in the attached figures. Each example is supplied by way of illustration of the invention and shall not be understood as a limitation thereof.

Before describing these embodiments, we must, also, clarify that the present description is not limited in its application to details of the construction and disposition of the components as described in the following description using the attached figures. The present description can provide other embodiments and can be obtained or executed in various other ways. We must also clarify that the phraseology and terminology used here is for the purposes of description only, and cannot be considered as limitative.

The attached figures are used to describe embodiments of a component 10 made of plastic material suitable to make up the containing body, the casing, the shell, the external structure and/or the external body, or at least part thereof, of household appliances 50 for home use, or other objects, such as, for example bowls, carafes, thermos flasks, and suchlike.

Although hereafter in the description we will refer, by way of example, to household appliances such as a kettle 50A and a toaster 50B, it is understood that the component 10 according to the invention can define a containing body, or casing, of other types of household appliances, such as vacuum cleaners, electric brushes, blenders, microwave ovens, electric ovens, fryers, teapots, coffee machines, ice cream machines, kneading machines, hair dryers, irons and suchlike.

The component 10 according to the invention comprises a first internal layer 11 and a second external layer 12 at least partly, overlapping the first internal layer 11.

According to some embodiments the component 10 has only two layers, first 11 and second 12.

According to preferred embodiments the first layer 11 and the second layer 12 can be made of plastic materials, for example heat-resistant polymeric materials.

According to possible embodiments, the first layer 11 and the second layer 12 can be made with materials having similar characteristics and properties.

According to possible embodiments, the first layer 11 and the second layer 12 can be made with materials having non homogeneous characteristics and properties.

According to some embodiments, for example applicable to household appliances for processing foodstuffs, the first layer 11 and the second layer 12 can be made with resins suitable for applications in the field of foodstuffs such as for example polypropylene.

According to possible embodiments it can be provided that only the first layer 11 is suitable for applications in the field of foodstuffs while the second layer 12 is not.

According to other embodiments, as a function of the applications, the first layer 11 and/or the second layer 12 can be made with thermoplastic resins of different nature.

According to some embodiments, the first layer 11 can be made with a first opaque material, or with a color, or a plurality of colors, while the second layer 12 can be made with a second at least partly transparent material, allowing the first internal opaque layer 11 to be visible through it.

By transparent or semi-transparent layer we mean that it can be passed through in all its thickness by luminous radiations allowing objects located beyond it to be visible.

This allows to confer a three-dimensional and partly convex appearance on the final component 10.

According to some embodiments, the second layer 12 is made of completely transparent material, that is substantially without colors or pigments, so as to confer an aesthetic appearance of lightness on the component 10.

In accordance with some embodiments the first layer 11 and the second layer 12 can be obtained by means of bi-injection processes.

The first layer 11 comprises a first surface 13 defining an internal surface of the component 10 and facing, during use, toward the inside of the household appliance 50.

The first layer 11, also, comprises a second surface 14, opposite the first surface 13, on which the second external layer 12 is positioned in contact.

According to some embodiments, the internal surface 13 can have a smooth, and uniform, development, that is without notches and/or protrusions.

The second layer 12 has an external surface 15, which defines, during use, an external surface of the component 10, opposite the internal surface 13, and therefore an external surface of the household appliance 50 on which it is applied.

According to some embodiments, the external surface 15 has a three-dimensional finish, and comprises at least one portion from which a plurality of aesthetic reliefs 16 extend suitable to confer a pleasant aesthetic appearance on the component 10.

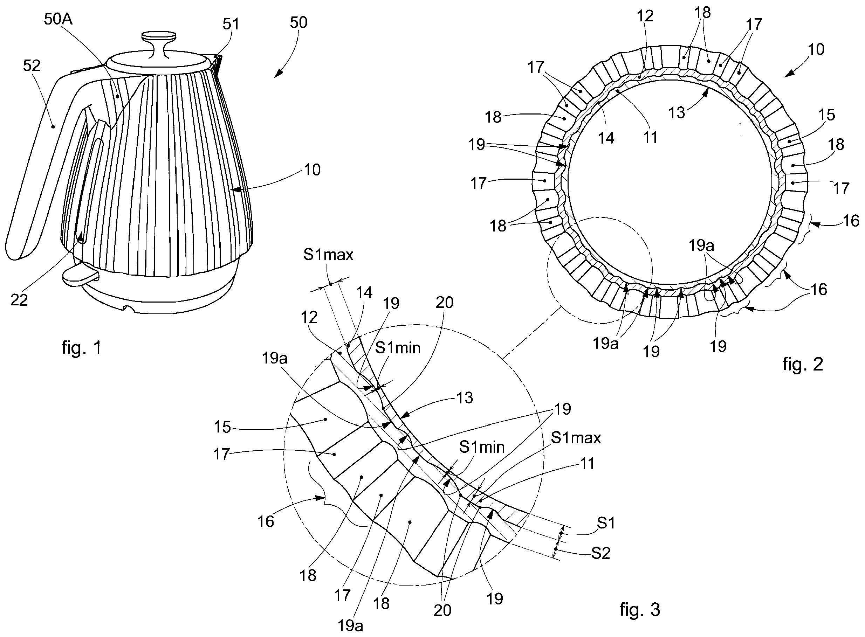

Examples of possible embodiments of the aesthetic reliefs 16, for example shown in figs. 1, 2, 3, 4, 4a and 4b, can comprise aesthetic reliefs 16 in the shape of parallel ribs, bubbles, or hemispheres, diamond-shaped workings, or other geometric, or non-geometric, shapes.

In particular, the external surface 15 has an alternation of protruding portions 17 and recessed portions 18 which confer the three-dimensional appearance on the component 10 and, in general, on the household appliance 50.

According to some embodiments, the protruding portions 17 and the recessed portions 18 correspond, respectively, to zones of the component 10 with differentiated thickness with respect to the internal surface 13.

According to a possible embodiment, the protruding portions 17 are configured as vertical ribs adjacent to each other and disposed substantially parallel to each other.

According to possible variants, ribs disposed horizontally, or oblique, or also protrusions or reliefs with a helix or spiral-shaped development can be provided.

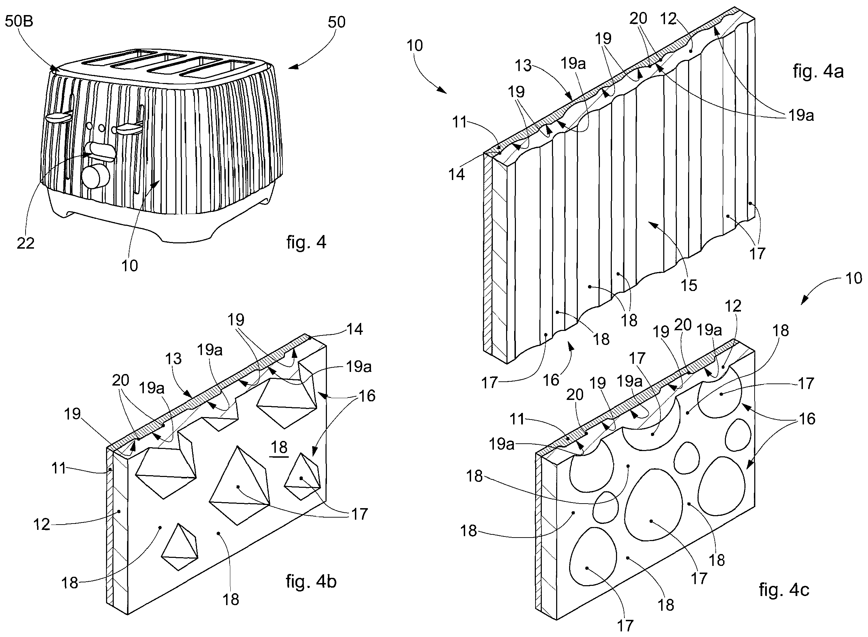

According to another embodiment shown in fig. 4a, the protruding portions 17 can be configured as portions of spheres, or bubbles, adjacent to each other, distributed uniformly or according to a desired disposition.

According to a further embodiment, shown in fig. 4b, the protruding portions 17 can be configured as polygonal-based pyramids, in this specific case of a rectangular type, adjacent to each other.

According to other variants, not shown, the reliefs 16 can take on other shapes, even non-geometric ones, for example flowers, hearts, and suchlike.

According to some embodiments, the component 10 can have a tubular shape.

The cross section, as a function of needs or the application, can have a circular, polygonal, oval shape, or with a perimeter comprising a combination of rectilinear and curved segments.

Furthermore, the component 10 can have a constant cross section along an axial development, or variable, with concave or convex portions.

According to other embodiments, the component 10 can have an open curved shape, and be configured to be connected to other similar components 10, or even to different elements, in order to make up, together, a containing body, or a casing, of a household appliance 50.

According to some embodiments, the second external layer 12 completely covers the first internal layer 11.

In other possible embodiments, the second layer 12 has an external end edge 23 which extends, in an axial direction X, beyond an internal end edge 24 of the first layer 11.

More in particular, in said embodiments, a portion of the second layer 12, in fact protrudes in the axial direction beyond the first layer 11.

In this way the component 10 has a peripheral strip 25 having a single layer made with the second material, in particular of the transparent type. This transparent peripheral strip 25 confers a light and three-dimensional appearance on the component 10.

According to other embodiments, the second layer 12 can extend, with respect to the main body of the component 10, in other parts, such as for example the pouring spout 51 or the handle 52 of a kettle 50A, in order to confer a further sense of lightness.

According to some embodiments, the first internal layer 11 comprises, made in its thickness, channels, or filling cavities 19.

The channels, or filling cavities 19 have a shape and position correlated to those of the recessed portions 18 of the external surface 15.

In particular, the filling cavities 19) can be made in the thickness of the first layer 11, in correspondence with the second surface 14, so as to follow the shape of the external surface 15 of the second layer 12 defined by the aesthetic reliefs 16, that is by the alternation between the protruding portions 17 and the recessed portions 18.

In other words, the second surface 14 of the first layer 11 comprises flat portions 19a interspersed with the filling cavities 19, which have a shape and position coherent respectively with those of the protruding portions 17 and of the recessed portions 18 of the second layer 12.

Advantageously, the filling cavities 19 are able to compensate, at least in part, for the differences in thickness between the protruding portions 17 and the recessed portions 18.

In other words, the second external layer 12 has a substantially constant thickness along the transverse extension of the component 10 or, in any case, a substantially constant average thickness, with the exception of small deviations with respect to an average value, for example of the order of 10-20%.

The first internal layer 11 has an average thickness variable in a transverse direction of the component 10.

According to some embodiments, the transition zones 20, interposed between portions of the second surface 14 comprising the filling cavities 19 and portions of the second surface 14 not comprising the filling cavities 19, can be configured with a beveled shape, as shown, for example, in fig. 3.

Advantageously, the transition zones 20 with a beveled shape prevent, or at least limit, during the step of injecting the second material to produce the second layer 12, concentrations of heat and therefore unwanted re-melting of the first material which makes the first layer 11.

In this way the erosion caused by the mechanical rubbing generated by the flow of the second material is also reduced.

According to some embodiments, a second thickness S2 of the external layer 12 is greater than a first thickness S1 of the internal layer 11.

Advantageously, the ratio between the second thickness S2 of the external layer 12 and the first thickness S1 of the internal layer 11 can be comprised in a range from 1.05 to 2.5, more preferably from 1.1 to 2.

The first thickness S1 has a minimum value S1 min in correspondence with the filling cavities 19 aligned with the recessed portions 17, and a maximum value S1max in correspondence with the flat portions 19a aligned with the protruding portions 18 of the second layer 12.

In the case of a component 10 having a tubular shape, the filling cavities 19 will be aligned with the respective recessed portions in a radial direction.

As a function of the shape and size of the reliefs 16, the first thickness S1 can vary directly between the minimum value S1 min and the maximum value S1 max, or it can take on intermediate values.

According to some embodiments, the maximum value S1max can be 20-50% greater than the minimum value S1min.

The first thickness S1 and the second thickness S2 can be defined as the maximum thicknesses of the respective layer. According to some embodiments, the component 10 can comprise a transparent window 22 suitable to allow a user to look through it.

For example, in the case of a kettle 50A, by means of the transparent window 22, the user can check the level of water contained in the containing body consisting of the component 10.

In other forms of application the window 22 can be configured to allow the user to see possible additional features of the household appliance, for example a thermostat or a timer of a 50B toaster.

In other forms of application the window 22 can be configured to allow the user to see possible internal parts of the household appliance 50 and/or to have visibility of the product being cooked, or also verify the accumulation of dust in a collection container of a vacuum cleaner.

According to some embodiments, the window 22 can be made directly by means of a second transparent external layer 12.

In particular, the first layer 11 can contain an aperture 21, or a slot shaped substantially with the shape of the window 22 to be obtained.

On the contrary, the second layer 12 which, in fact, covers the first layer 11 can be obtained so as to completely cover the aperture 21 or slot, in continuity with the external surface 15.

According to possible solutions, the component 10 can provide a different surface finish of the second layer 12 in correspondence with the window 22, for example a substantially flat and smooth finish, to allow a better visibility through it.

Advantageously, the window 22 thus made does not require any particular assemblies, or any packing or other devices able to guarantee its hermetic seal. In fact, the window 22 thus made guarantees an optimal seal and prevents possible liquids, steam, or dust contained in the household appliance both from leaking from the inside toward the outside, and also, conversely, from penetrating from the external environment into the internal one.

Embodiments described here with reference to figs, from 5 to 12, also concern an apparatus 26 for the production of the component 10.

The apparatus 26 comprises a first molding assembly 27 configured to make the first layer 11 and a second molding assembly 28 configured to make the second layer 12.

In one embodiment of the apparatus 26 the first molding assembly 27 is positioned adjacent, adjoining and close to the second molding assembly 28.

According to some embodiments, the first molding assembly 27 and the second molding assembly 28 are located sequentially one after the other, and can be made to function in direct temporal succession in order to obtain the finished component 10, with a single process.

According to some embodiments, the first molding assembly 27 comprises a punch 29 and a first molding matrix 30 suitable to cooperate so as to define a first molding volume V1 between them, and a first injection unit 31 configured to inject the first plastic material into the first molding volume V1.

According to some embodiments, the first molding volume V1 has a first maximum width W1ₘₐₓ coherent with the first thickness S1 of the first layer 11.

According to some embodiments, the first injection unit 31 comprises first heating means 53 configured to heat the first plastic material to a first injection temperature T1.

According to some embodiments, the punch 29 has a contrast surface 32 configured to define, in negative, the shape of the internal surface 13 of the first layer 11 of the component 10.

According to some embodiments, the contrast surface 32 can be substantially uniform and smooth.

By way of example, in the case of a component 10 suitable to make a kettle 50A, the punch 29 can have a substantially truncated cone shape, whereas in the case of a component 10 suitable to make a toaster 50B, the punch 29 can have the shape of a parallelepiped with quadrangular cross section.

The first matrix 30 comprises a first molding surface 33, configured to define, in negative, the shape of the second surface 14 of the first layer 11.

According to some embodiments, the first molding matrix 30 can comprise one, or more first molding cheeks 37 configured to be positioned, during use, one adjacent to the other so as to define a single first molding surface 33 of the first molding matrix 30.

According to some embodiments, the first molding surface 33 comprises at least one portion having first molding ridges 38 protruding, during use, inside the first molding volume V1.

The first molding ridges 38 define, in negative, the shape of the filling cavities 19 to be made in the first layer 11.

According to some embodiments, the second molding assembly 28 comprises a second molding matrix 34 having a second molding surface 35 suitable to define, in negative, the shape of the external surface 15 of the component 10.

The second molding matrix 34 is suitable to cooperate, during use, with the second surface 14 of the first layer 11 of material, to define a second molding volume V2 between them.

According to some embodiments, the second molding volume V1 has a second width W2ₘₐₓ, coherent with the second thickness S2 of the second layer 12, which is greater than the first width W1ₘₐₓ.

According to some embodiments, the ratio between the second width W2ₘₐₓ and the first width W1ₘₐₓ is comprised between 1.05 and 2.5, preferably between 1.1 and 2.

The second molding assembly 28, also, comprises a second injection unit 36 configured to inject the second plastic material into the second molding volume V2.

According to some embodiments, the second injection unit 36 comprises second heating means 54 configured to heat the second plastic material to a second injection temperature T2.

According to some embodiments, the first 53 and the second heating means 54 are able to be activated and adjusted independently of each other.

According to some embodiments, the second molding matrix 34 comprises one or more second molding cheeks 39.

In particular the second molding cheeks 39 are configured to be positioned, during use, one adjacent to the other so as to define a single second molding surface 35 of the second molding matrix 34.

According to some embodiments, on at least one portion of said second molding surface 35, multiple cavities 40a are made alternating with respective molding reliefs 40b.

In particular, the cavities 40a and the molding reliefs 40b are able to define, in negative, the shape of the aesthetic reliefs 16 present on the external surface 15.

The cavity 40a and the molding reliefs 40b therefore have a shape and size correlated to the shape and final size of the protruding portions 17 and of the recessed portions 18 of the external surface 15.

The cavities 40a and the molding reliefs 40b are correlated with the molding ridges 38 of the first molding matrix 30.

In other words, the cavities 40a and the molding reliefs 40b of the second molding matrix 34 have a shape, sizes and position coordinated with those of the molding ridges 38 of the first molding matrix 30.

In particular, the molding reliefs 40b are positioned, during use, in positions correlated with those of the molding ridges 38.

According to some embodiments the first molding cheeks 37 and the second molding cheeks 39 are replaceable so that components 10 with different aesthetic shapes can be produced with the same apparatus 26.

For example, a plurality of sets of first 37 and second molding cheeks, 39 having different surface finishes can be provided, as a function of the final appearance the component 10 has to have.

According to other embodiments, the first molding assembly 26 comprises at least one coupling protuberance 41 configured to define, in the first layer 11, an aperture 21, or a slot, or an empty portion, without the first material, and at the same time keep the punch 29 and the first matrix 30 separate from each other.

According to some embodiments, the at least one coupling protuberance 41 is provided on one of the first molding cheeks 37.

In particular, the coupling protuberance 42 is configured to cooperate with the punch 29 so as to confine and limit a portion of the first molding volume V1 and prevent access of the first material therein.

According to some embodiments, the coupling protuberance 41 is configured to produce a coupling and a minimum contact with the punch 29, in order to preserve the finish and the shine of the contrast surface 32 of the punch 29.

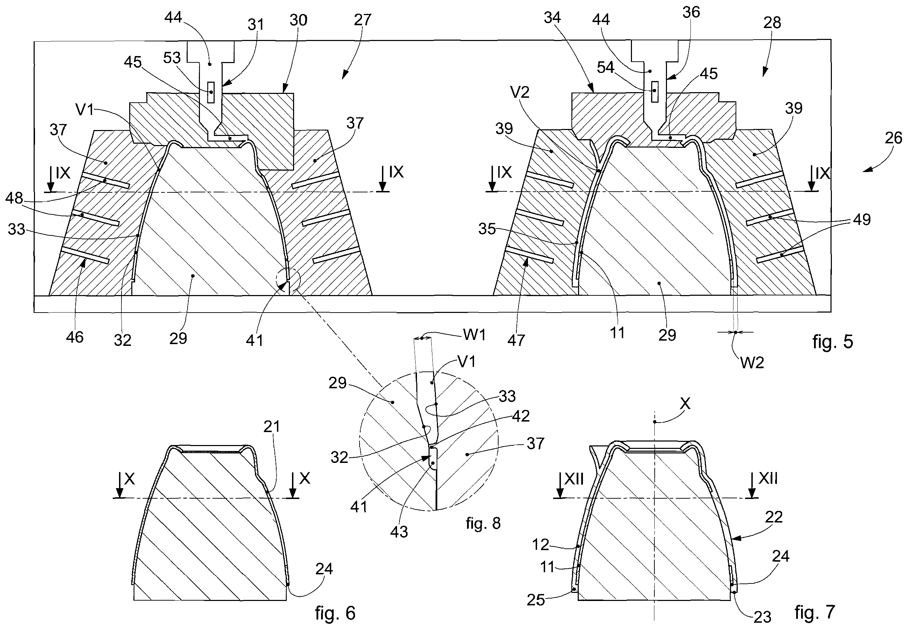

According to some embodiments, for example described with reference to fig. 8, the coupling protuberance 41 comprises at least one protruding abutment element 42, suitable to be positioned in contact with the contrast surface 32 of the punch 29, so as to define an empty space, or cavity 43 between the punch 29 and the respective first molding surface 33.

According to further embodiments, the coupling protuberance 41 can be provided on the punch 29, possibly providing to make the cavity 43 between the punch 29 and the first matrix 30 on the punch 29, and more specifically along the contrast surface 32.

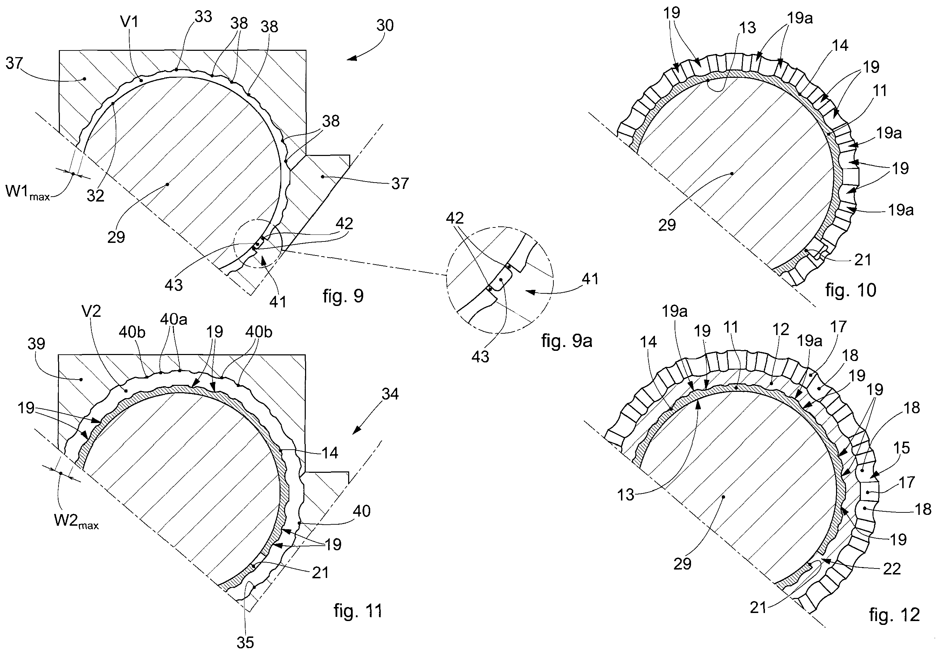

According to some embodiments, for example described with reference to fig. 10, the coupling protuberance 41 can comprise a pair of abutment elements 42, or even one annular-shaped abutment element, suitable to delimit the cavity 43, separating it from the first molding volume V1.

The abutment elements 42, during use, are configured to rest and press against the surface 32 of the punch 29 so as to guarantee the hermetic seal of the cavity 43.

In this way the first molding volume V1 is limited in the corresponding zones in which an aperture 21 is provided in the first layer 11.

According to some embodiments, the cavity 43 can have a height, defined by the distance between the respective facing surfaces of the punch 29 and the first matrix 30, comprised between a few hundredths and a few tenths of a millimeter.

According to some embodiments, the abutment elements 42 have a width of a few tenths of a millimeter, for example comprised between 0.2 and 1.5.

A width value comprised between 0.2 and 0.9 mm allows to reduce the contact between the punch 29 and the matrix 30 to a minimum, obtaining a cavity 43 with a larger area.

A slightly greater width value, for example comprised between 0.9 and 1.5, allows, with the only disadvantage being a small reduction in the area of the cavity 43, to guarantee a hermetic seal between the punch 29 and the matrix 30 even with lower closing forces, or in the case of workings that require a lower degree of precision.

According to some embodiments, one or more coupling protuberances 41 can be present, having the same or different shapes from each other, as a function of the shape and size of the aperture 21 to be obtained.

For example, in the case of a component 10 applied to a kettle 50A, there can be a first coupling protuberance 41 suitable to make the window 22 for controlling the water level (fig. 10), a second coupling protuberance 41 for making the spout, and a third coupling protuberance 41 for making the transparent peripheral strip 25 (fig. 10).

In some embodiments the abutment element 42 can be shaped according to the shape of the window 22 to be obtained in the component 10.

In other embodiments the abutment element 42 can be shaped so as to define the shape of the end edge 24 of the first layer 11.

Advantageously, the cavity 43 present between the punch 29 and the first molding matrix 30 allows to preserve the finish and the shine of the contrast surface 32 of the punch 29, even after several molding cycles.

According to some embodiments, the first 31 and the second injection unit 36 each comprise at least one injection device 44 and at least one injection channel 45 able to fluidly connect a respective injection device 44 with one of either the first injection volume V1 or the second injection volume V2.

According to some embodiments, a plurality of injection devices 44 for each injection unit 31, 36 can also be provided.

According to some embodiments, at least one injection channel 45 is made in at least one of the first molding cheeks 37, and in at least one of the second molding cheeks 39.

According to some embodiments, the apparatus 26 can comprise, for each molding assembly 27, 28, a respective first cooling circuit 46 and a second cooling circuit 47.

The first cooling circuit 46 comprises one or more cooling channels 48 and a unit for pumping a refrigerant fluid, or a heat exchanger with a refrigerating circuit, of the known type and not shown in the figures.

The second cooling circuit 47 comprises one or more cooling channels 49 and a unit for pumping a refrigerant fluid, or a heat exchanger with a refrigerating circuit, of a known type and not shown in the figures.

According to some embodiments, the cooling channels 48, 49 can be made through in at least one of the first molding cheeks 37, and/or second molding cheeks 38 and/or in the punch 29.

In particular, the cooling channels 48, 49, are configured to allow the passage of refrigeration fluids inside them, such as for example water, emulsions and/or oils.

Embodiments described here with reference to figures 5 to 12, also concern a method for the production of the component 10.

The method comprises a first step of injecting a first plastic material for the production of the first layer 11;
- a second step of injecting a second plastic material for the production of the second layer 12, having an external surface 15 provided with a three-dimensional finish, comprising an alternation of protruding portions 17 and recessed portions 18.

According to some embodiments, the method provides to reciprocally position a punch 29 and a first molding matrix 30 defining a first molding volume V1 between them, and inject the first material into the first volume V1 thus defined. The first molding volume V1 is defined between the contrast surface 32 of the punch 29 and the first molding surface 33, as shown in the right-hand portion of fig. 5 and in fig. 9.

According to some embodiments the method provides to inject the first material with defined temperature and pressure parameters.

According to some embodiments, the method provides - at least in the case of polypropylene - to inject the first material with a first temperature T1 comprised between 150 °C and 260 °C.

According to other embodiments, the first temperature T1 is comprised in the range from 120° C to 240° C, preferably from 160° C to 220° C, even more preferably from 180° C to 200° C.

According to one embodiment the method provides to inject the first material with a first pressure P1 comprised between 700 kg/cm² and 1300 kg/cm².

According to other embodiments, the first pressure P1 can be comprised between 750 kg/cm² and 1250 kg/cm², even more preferably between 800 kg/cm² and 1200 kg/cm².

The first injection step allows to obtain the first internal layer 11 of the component 10 (figs. 6 and 10).

According to some embodiments, during the first injection step, the method can comprise the circulation of refrigerant fluids in the first cooling circuit 46 in order to cool at least one of either the first matrix 30 and/or the punch 29.

According to some embodiments, the method provides to use a refrigerant fluid having a first cooling temperature T3 comprised in the range between 35°C and 55°C, more preferably between 40°C and 50°C.

Subsequently the method provides to position the punch 29 with the first layer 11 made thereon in the second molding assembly 28, positioning the second matrix 34 so as to define, together with the second surface 14 of the first layer 11, the second molding volume V2.

The second molding volume V2 is defined between the second surface 14 of the first layer 11, which comprises the filling cavities 19, and the second molding surface 35, as shown, for example, in the right-hand side of fig. 7 and in fig 11.

The method then comprises a second injection step in which a second plastic material is injected into the second molding volume V2 at a second temperature T2 and at a second pressure P2.

According to a possible embodiment, the second injection step is immediately after the first injection step.

According to one embodiment, the method provides to use a second temperature T2 lower than the first temperature T1.

According to a preferred embodiment, the second temperature T2 is comprised in a range from 0.90 to 0.95 times T1. In other words, the second temperature T2 is 5-10% lower than the first temperature T1.

According to one embodiment, the second pressure P2 can advantageously be lower than the first pressure P1.

According to one embodiment, the second pressure P2 can be comprised in a range from 0.70 to 0.90 times P1. In other words, the second pressure P2 is 10-30% lower than the first pressure P1 .

The second injection step produces the second external layer 12 of the component 10.

According to some embodiments, during the second injection step, the method can comprise the circulation of refrigerant fluids in the second cooling circuit 47 in order to cool at least one of either the second matrix 34 and/or the punch 29 to a second cooling temperature T4.

According to a preferred embodiment the second cooling temperature T4 can be comprised in the range between 25°C and 45°C, more preferably between 30°C and 40°C.

According to some embodiments, the method provides to make the second layer 12 with a thickness greater than the first layer 11.

According to some embodiments, thanks to the different and greater thickness of the second layer 12 with respect to the first layer 11, for the production of the second layer 12 it is possible to use lower work parameters of temperatures and pressures, thus improving the stability and brightness of the surfaces, also reducing possible deformations in the post-shrinkage step.

According to other embodiments the method provides to make at least one transparent window 22.

In order to make the window 22 the method provides to make an aperture 21, or a slot in the first internal layer 11, and cover the aperture 21, or slot, with the second material, in this specific case transparent, during the second injection step.

According to some embodiments, at the end of the second injection step, the method comprises decoupling the molding punch 29 and the second molding matrix 35 and extracting the component 10.

It is clear that modifications and/or additions of parts or steps may be made to the component 10, to the apparatus 26 and to the method as described heretofore, without departing from the field of the present invention as defined by the claims.

It is also clear that, although the present invention has been described with reference to some specific examples, a person of skill in the art shall certainly be able to achieve many other equivalent forms of the component 10, of the apparatus 26 and of the method, having the characteristics as set forth in the claims and hence all coming within the field of protection defined thereby.

## Claims

1. Method for the production of a component (10) made of plastic material, suitable to form a containing body, or casing of a household appliance (50), or of a receptacle, comprising:
- a first step of injecting a first plastic material into a first molding volume (V1) defined between a punch (29) and a first matrix (30) to make a first layer (11);
- a second step of injecting a second plastic material into a second molding volume (V2) defined between said first layer (11) obtained in the first injection step and a second matrix (34), to make a second layer (12),
wherein the first layer (11) comprises a first surface (13) defining an internal surface of the component (10) and facing, during use, toward the inside of the household appliance (50) and a second surface (14), opposite the first surface (13), on which the second layer (12) is positioned in contact,
**characterized in that** it provides to make said second layer (12) having an external surface (15), opposite the internal surface of the first layer (11), provided with a three-dimensional finish, comprising an alternation of protruding portions (17) and recessed portions (18), wherein said external surface (15) defines, during use, an external surface of the component (10), and therefore an external surface of said household appliance (50) on which it is applied, **and in that,** during the first injection step, it provides to make, on said first layer (11), channels, or filling cavities (19), correlated to the shape and position of said recessed portions (18) of said second layer (12), suitable to compensate for the difference in thickness between said protruding portions (17) and said recessed portions (18), so as to obtain, in said second injection step, a substantially uniform filling flow of said second material.

2. Method as in claim 1, **characterized in that** it provides to use a first opaque material, with a color, or a plurality of colors, and a second at least partly transparent material, allowing the first opaque layer (11) to be visible through the second transparent layer (12).

3. Method as in claim 1 or 2, **characterized in that,** it provides to make the first layer (11) with a first thickness (S1) and the second layer (12) with a second thickness (S2) greater than the first thickness (S1).

4. Method as in any claim hereinbefore, **characterized in that** it provides to perform the second injection step immediately at the end of the first injection step.

5. Apparatus for the production of a component (10) made of plastic material comprising a first layer (11) and a second layer (12) and suitable to form a containing body, or casing of a household appliance (50), wherein the first layer (11) comprises a first surface (13) defining an internal surface of the component (10) and facing, during use, toward the inside of the household appliance (50) and a second surface (14), opposite the first surface (13), on which the second layer (12) is positioned in contact, said apparatus comprising:
- a first molding assembly (27), comprising a punch (29) and a first matrix (30) having a first molding surface (33), suitable to define a first molding volume (V1) between them, and a first injection unit (31) configured to inject a first plastic material into said first molding volume (V1) and obtain said first layer (11);
- a second molding assembly (28), comprising a second matrix (34) having a second molding surface (35) suitable to define, together with said first layer (11) of said component (10), a second molding volume (V2), and a second injection unit (36) configured to inject a second plastic material into said second molding volume (V2) and obtain said second layer (12);
**characterized in that** molding cavities (40a) are made alternated with molding ridges (40b) on at least one portion of said second molding surface (35), which are able to define, in negative, the shape of an external surface (15) of said second layer (12) of said component (10), having an alternation of protruding portions (17) and recessed portions (18), wherein said external surface (15) defines, during use, an external surface of the component (10), opposite the internal surface of said first layer (11), and therefore an external surface of said household appliance (50) on which it is applied **and in that,** molding reliefs (38) are made on at least one portion of said first molding surface (33) and protruding, during use, inside said first molding volume (V1) and configured to define, in said first layer (11), filling channels or cavities (19) correlated to the shape and to the position of the ridges (40b) of said second molding surface (35).

6. Apparatus as in claim 5, **characterized in that** the molding ridges (40b) of said second matrix (34) are of a shape correlated to the shape of said molding reliefs (38) of said first matrix (30).

7. Apparatus as in claims 5 or 6, **characterized in that** said first matrix (30) and said second matrix (34) comprise respective first molding cheeks (37) and second molding cheeks (39) which are able to be replaced to form a plurality of three-dimensional finishes.

8. Component made of plastic material, suitable to form a containing body, or a casing of a household appliance (50), or of a receptacle, comprising:
- a first internal layer (11) made of a first plastic material, and
- a second external layer (12) made of a second plastic material, which at least partly covers the first layer (11),
wherein the first layer (11) comprises a first surface (13) defining an internal surface of the component (10) and facing, during use, toward the inside of the household appliance (50) and a second surface (14), opposite the first surface (13), on which the second layer (12) is positioned in contact,
**characterized in that** said second layer (12) comprises an external surface (15), opposite the internal surface of the first layer (11), having a three-dimensional finish comprising an alternation of protruding portions (17) and recessed portions (18), wherein said external surface (15) defines, during use, an external surface of the component (10), opposite an internal surface (13) of said internal layer (11), defining an internal surface of the component (10) and therefore an external surface of the household appliance (50) on which it is applied, **and in that** said first layer (11) comprises, made in its thickness, channels, or filling cavities (19) which are correlated to the shape and position of said recessed portions (18) of said second layer (12), suitable to compensate, at least partly, for the difference in thickness between said protruding portions (17) and said recessed portions (18).

9. Component as in claim 8, **characterized in that** said first layer (11) has a first thickness that varies in a transverse direction of said component between a minimum value (S1 min) in correspondence with said channels, or filling cavities (19) and a maximum thickness (S1max) in correspondence with flat portions (19a) which are interspersed with said filling cavities or channels (19) and said second layer (12) has a second thickness (S2) substantially constant in said transverse direction.

10. Component as in claim 9, **characterized in that** said second thickness (S2) of said second external layer (12) is greater than said first thickness (S1) of said first internal layer (11).

11. Component as in any claim from 8 to 10, **characterized in that** the first internal layer (11) is made with a first opaque material, and the second external layer (12) is made with a second, at least partly transparent, material, allowing the first opaque internal layer (11) to be visible through it.

12. Component as in any claim from 8 to 11, **characterized in that** said second external layer (12) extends, at least in an axial direction (X), beyond an end edge (24) of said first internal layer (11).

13. Component as in any claim from 8 to 12, **characterized in that** said protruding portions (17) are configured as vertical ribs adjacent to each other and disposed substantially parallel to each other.

14. Component as in any claim from 8 to 13, **characterized in that** it has a tubular shape.

15. Household appliance, such as a kettle (50A) or a toaster (50B) **characterized in that** it comprises a containing body, or a casing, at least partly made with a component (10) as in any claim from 8 to 13.

## Patentansprüche

1. Verfahren zur Herstellung eines aus Kunststoffmaterial bestehenden Bauteils (10), das zum Bilden eines Gehäuses oder einer Verkleidung eines Haushaltsgeräts (50) oder eines Behälters geeignet ist, aufweisend:
- einen ersten Schritt des Einspritzens eines ersten Kunststoffmaterials in ein erstes Formvolumen (V1), das zwischen einem Stempel (29) und einer ersten Matrize (30) definiert ist, um eine erste Schicht (11) herzustellen;
- einen zweiten Schritt des Einspritzens eines zweiten Kunststoffmaterials in ein zweites Formvolumen (V2), das zwischen der im ersten Einspritzschritt erhaltenen ersten Schicht (11) und einer zweiten Matrize (34) definiert ist, um eine zweite Schicht (12) herzustellen,
wobei die erste Schicht (11) eine erste Fläche (13) aufweist, die eine Innenfläche des Bauteils (10) definiert und während der Verwendung dem Inneren des Haushaltsgeräts (50) zugewandt ist, und eine zweite Fläche (14), die der ersten Fläche (13) gegenüberliegt und auf der die zweite Schicht (12) in Kontakt angeordnet ist,
**dadurch gekennzeichnet, dass** es vorsieht, dass die zweite Schicht (12) eine Außenfläche (15), die der Innenfläche der ersten Schicht (11) gegenüberliegt, erhält, die mit einem dreidimensionalen Finish versehen ist, das abwechselnd hervorstehende Abschnitte (17) und vertiefte Abschnitte (18) aufweist, wobei die Außenfläche (15) während der Verwendung eine Außenfläche des Bauteils (10) und somit eine Außenfläche des Haushaltsgeräts (50), bei dem es angewendet wird, definiert, **und dass** es während des ersten Einspritzschritts vorsieht, dass auf der ersten Schicht (11) Kanäle oder Füllvertiefungen (19) erzeugt werden, die mit der Form und Position der vertieften Abschnitte (18) der zweiten Schicht (12) korrelieren und geeignet sind, den Unterschied in der Dicke zwischen den vorstehenden Abschnitten (17) und den vertieften Abschnitten (18) auszugleichen, um im zweiten Einspritzschritt einen im Wesentlichen gleichmäßigen Füllfluss des zweiten Materials zu erhalten.

2. Verfahren nach Anspruch 1, **dadurch gekennzeichnet, dass** es vorsieht, dass ein erstes undurchsichtiges Material mit einer Farbe oder einer Mehrzahl von Farben und ein zweites zumindest teilweise transparentes Material, dass ermöglicht, dass die erste undurchsichtige Schicht (11) durch die zweite transparente Schicht (12) sichtbar ist, verwendet werden.

3. Verfahren nach Anspruch 1 oder 2, **dadurch gekennzeichnet, dass** es vorsieht, dass die erste Schicht (11) mit einer ersten Dicke (S1) und die zweite Schicht (12) mit einer zweiten Dicke (S2), die größer als die erste Dicke (S1) ist, hergestellt werden.

4. Verfahren nach einem der vorstehenden Ansprüche, **dadurch gekennzeichnet, dass** es vorsieht, dass der zweite Einspritzschritt unmittelbar nach dem Ende des ersten Einspritzschritts durchgeführt wird.

5. Vorrichtung zur Herstellung eines aus Kunststoffmaterial bestehenden Bauteils (10), das eine erste Schicht (11) und eine zweite Schicht (12) aufweist und zum Bilden eines Gehäuses oder einer Verkleidung eines Haushaltsgeräts (50) geeignet ist, wobei die erste Schicht (11) eine erste Fläche (13) aufweist, die eine Innenfläche des Bauteils (10) definiert und während der Verwendung dem Inneren des Haushaltsgeräts (50) zugewandt ist, und eine zweite Fläche (14), die der ersten Fläche (13) gegenüberliegt und auf der die zweite Schicht (12) in Kontakt angeordnet ist, wobei die Vorrichtung aufweist:
- eine erste Formvorrichtung (27), die einen Stempel (29) und eine erste Matrize (30) mit einer ersten Formfläche (33) aufweist, geeignet, zwischen ihnen ein erstes Formvolumen (V1) zu definieren, sowie eine erste Einspritzeinheit (31), die eingerichtet ist, ein erstes Kunststoffmaterial in das erste Formvolumen (V1) einzuspritzen und die erste Schicht (11) zu erhalten;
- eine zweite Formvorrichtung (28), die eine zweite Matrize (34) mit einer zweiten Formfläche (35) aufweist, geeignet, um zusammen mit der ersten Schicht (11) des Bauteils (10) ein zweites Formvolumen (V2) zu definieren, sowie eine zweite Einspritzeinheit (36), die eingerichtet ist, ein zweites Kunststoffmaterial in das zweite Formvolumen (V2) einzuspritzen und die zweite Schicht (12) zu erhalten;
**dadurch gekennzeichnet, dass** Formvertiefungen (40a) abwechselnd mit Formerhöhungen (40b) auf mindestens einem Abschnitt der zweiten Formfläche (35) ausgebildet sind, die in der Lage sind, als Negativ, die Form einer Außenfläche (15) der zweiten Schicht (12) des Bauteils (10) zu definieren, mit einem Wechsel von vorstehenden Abschnitten (17) und vertieften Abschnitten (18), wobei die Außenfläche (15) während der Verwendung eine Außenfläche des Bauteils (10) gegenüber der Innenfläche der ersten Schicht (11) definiert und somit eine Außenfläche des Haushaltsgeräts (50), bei dem es angewendet wird, **und dass** Formreliefs (38) auf mindestens einem Abschnitt der ersten Formfläche (33) ausgebildet sind und während der Verwendung in das erste Formvolumen (V1) hineinragen und so eingerichtet sind, dass sie in der ersten Schicht (11) Füllkanäle oder -vertiefungen (19) definieren, die mit der Form und der Position der Erhöhungen (40b) der zweiten Formfläche (35) korrelieren.

6. Vorrichtung nach Anspruch 5, **dadurch gekennzeichnet, dass** die Formerhöhungen (40b) der zweiten Matrix (34) eine Form aufweisen, die mit der Form der Formreliefs (38) der ersten Matrix (30) korreliert ist.

7. Vorrichtung nach Anspruch 5 oder 6, **dadurch gekennzeichnet, dass** die erste Matrize (30) und die zweite Matrize (34) jeweilige erste Formbacken (37) und zweite Formbacken (39) aufweisen, die ausgetauscht werden können, um eine Mehrzahl von dreidimensionalen Finishs zu bilden.

8. Aus Kunststoffmaterial bestehendes Bauteil, das zum Bilden eines Gehäuses oder einer Verkleidung eines Haushaltsgeräts (50) oder eines Behälters geeignet ist, aufweisend:
- eine erste innere Schicht (11) aus einem ersten Kunststoffmaterial, und
- eine zweite äußere Schicht (12) aus einem zweiten Kunststoffmaterial, die die erste Schicht (11) zumindest teilweise bedeckt,
wobei die erste Schicht (11) eine erste Fläche (13) aufweist, die eine Innenfläche des Bauteils (10) definiert und während der Verwendung dem Inneren des Haushaltsgeräts (50) zugewandt ist, und eine zweite Fläche (14), die der ersten Fläche (13) gegenüberliegt und auf der die zweite Schicht (12) in Kontakt angeordnet ist,
**dadurch gekennzeichnet, dass** die zweite Schicht (12) eine Außenfläche (15) aufweist, die der Innenfläche der ersten Schicht (11) gegenüberliegt und ein dreidimensionales Finish aufweist, das abwechselnd hervorstehende Abschnitte (17) und vertiefte Abschnitte (18) aufweist, wobei die Außenfläche (15) während der Verwendung eine Außenfläche des Bauteils (10) definiert, gegenüber einer Innenfläche (13) der inneren Schicht (11), die eine Innenfläche des Bauteils (10) definiert, und somit eine Außenfläche des Haushaltsgeräts (50), bei dem es verwendet wird, **und dass** die erste Schicht (11), in ihrer Dicke ausgebildet, Kanäle oder Füllvertiefungen (19) aufweist, die mit der Form und Position der vertieften Abschnitte (18) der zweiten Schicht (12) korrelieren und geeignet sind, zumindest teilweise den Unterschied in der Dicke zwischen den vorstehenden Abschnitten (17) und den vertieften Abschnitten (18) auszugleichen.

9. Bauteil nach Anspruch 8, **dadurch gekennzeichnet, dass** die erste Schicht (11) eine erste Dicke aufweist, die in einer Querrichtung des Bauteils variiert zwischen einem minimalen Wert (S1min) entsprechend den Kanälen oder Füllvertiefungen (19) und einer maximalen Dicke (S1max) entsprechend flachen Abschnitten (19a), die mit den Füllvertiefungen oder Kanälen (19) durchsetzt sind, und die zweite Schicht (12) eine zweite Dicke (S2) aufweist, die in der Querrichtung im Wesentlichen konstant ist.

10. Bauteil nach Anspruch 9, **dadurch gekennzeichnet, dass** die zweite Dicke (S2) der zweiten äußeren Schicht (12) größer ist als die erste Dicke (S1) der ersten inneren Schicht (11).

11. Bauteil nach einem der Ansprüche 8 bis 10, **dadurch gekennzeichnet, dass** die erste innere Schicht (11) aus einem ersten undurchsichtigen Material hergestellt ist und die zweite äußere Schicht (12) aus einem zweiten, zumindest teilweise transparenten Material hergestellt ist, dass es ermöglicht, dass die erste undurchsichtige innere Schicht (11) durch sie hindurch sichtbar ist.

12. Bauteil nach einem der Ansprüche 8 bis 11, **dadurch gekennzeichnet, dass** sich die zweite äußere Schicht (12) zumindest in einer axialen Richtung (X) über eine Endkante (24) der ersten inneren Schicht (11) hinaus erstreckt.

13. Bauteil nach einem der Ansprüche 8 bis 12, **dadurch gekennzeichnet, dass** die vorstehenden Abschnitte (17) als vertikale Rippen ausgebildet sind, die nebeneinander und im Wesentlichen parallel zueinander angeordnet sind.

14. Bauteil nach einem der Ansprüche 8 bis 13, **dadurch gekennzeichnet, dass** es eine Röhrenform hat.

15. Haushaltsgerät, wie beispielsweise ein Wasserkocher (50A) oder ein Toaster (50B), **dadurch gekennzeichnet, dass** es ein Gehäuse oder eine Verkleidung aufweist, das/die zumindest teilweise aus einem Bauteil (10) gemäß einem der Ansprüche 8 bis 13 hergestellt ist.

## Revendications

1. Procédé de production d'un composant (10) en matière plastique, adapté pour former un corps contenant, ou un boîtier d'un appareil ménager (50), ou d'un réceptacle, comprenant :
- une première étape d'injection d'une première matière plastique dans un premier volume de moulage (V1) défini entre un poinçon (29) et une première matrice (30) pour réaliser une première couche (11) ;
- une seconde étape d'injection d'une seconde matière plastique dans un second volume de moulage (V2) défini entre ladite première couche (11) obtenue à la première étape d'injection et une seconde matrice (34), pour réaliser une seconde couche (12),
dans lequel la première couche (11) comprend une première surface (13) définissant une surface interne du composant (10) et faisant face, pendant l'utilisation, vers l'intérieur de l'appareil ménager (50) et une seconde surface (14), opposée à la première surface (13), sur laquelle la seconde couche (12) est positionnée en contact,
**caractérisé en ce qu'**il prévoit de réaliser ladite seconde couche (12) ayant une surface externe (15), opposée à la surface interne de la première couche (11), pourvue d'une finition tridimensionnelle, comprenant une alternance de parties saillantes (17) et de parties en retrait (18), dans lequel ladite surface externe (15) définit, pendant l'utilisation, une surface externe du composant (10), et donc une surface externe dudit appareil ménager (50) sur lequel elle est appliquée, **et en ce que,** pendant la première étape d'injection, il prévoit de réaliser, sur ladite première couche (11), des canaux ou des cavités de remplissage (19), corrélés à la forme et à la position desdites parties en retrait (18) de ladite seconde couche (12), adaptés pour compenser la différence d'épaisseur entre lesdites parties saillantes (17) et lesdites parties en retrait (18), de manière à obtenir, dans ladite seconde étape d'injection, un flux de remplissage sensiblement uniforme de ladite seconde matière.

2. Procédé selon la revendication 1, **caractérisé en ce qu'**il comprend l'utilisation d'une première matière opaque, d'une certaine couleur, ou d'une pluralité de couleurs, et d'une seconde matière au moins partiellement transparente, permettant à la première couche opaque (11) d'être visible à travers la seconde couche transparente (12).

3. Procédé selon la revendication 1 ou 2, **caractérisé en ce qu'**il prévoit de réaliser la première couche (11) avec une première épaisseur (S1) et la seconde couche (12) avec une seconde épaisseur (S2) supérieure à la première épaisseur (S1).

4. Procédé selon l'une quelconque des revendications précédentes, **caractérisé en ce qu'**il prévoit d'effectuer la seconde étape d'injection immédiatement à la fin de la première étape d'injection.

5. Appareil pour la production d'un composant (10) en matière plastique comprenant une première couche (11) et une seconde couche (12) et adapté pour former un corps contenant, ou un boîtier d'un appareil ménager (50), dans lequel la première couche (11) comprend une première surface (13) définissant une surface interne du composant (10) et faisant face, pendant l'utilisation, vers l'intérieur de l'appareil ménager (50) et une seconde surface (14), opposée à la première surface (13), sur laquelle la seconde couche (12) est positionnée en contact, ledit appareil comprenant:
- un premier ensemble de moulage (27), comprenant un poinçon (29) et une première matrice (30) ayant une première surface de moulage (33), adaptés pour définir un premier volume de moulage (V1) entre eux et une première unité d'injection (31) configurée pour injecter une première matière plastique dans ledit premier volume de moulage (V1) et obtenir ladite première couche (11) ;
- un second ensemble de moulage (28), comprenant une seconde matrice (34) ayant une seconde surface de moulage (35) adaptée pour définir, conjointement avec ladite première couche (11) dudit composant (10), un second volume de moulage (V2), et une seconde unité d'injection (36) configurée pour injecter une seconde matière plastique dans ledit second volume de moulage (V2) et obtenir ladite seconde couche (12) ;
**caractérisé en ce que** des cavités de moulage (40a) sont réalisées en alternance avec des arêtes de moulage (40b) sur au moins une partie de ladite seconde surface de moulage (35), qui peuvent définir, en négatif, la forme d'une surface externe (15) de ladite seconde couche (12) dudit composant (10), ayant une alternance de parties saillantes (17) et de parties en retrait (18), dans lequel ladite surface externe (15) définit, pendant l'utilisation, une surface externe du composant (10), opposée à la surface interne de ladite première couche (11), et donc une surface externe dudit appareil ménager (50) sur lequel elle est appliquée **et en ce que,** des reliefs de moulage (38) sont réalisés sur au moins une partie de ladite première surface de moulage (33) et faisant saillie, pendant l'utilisation, à l'intérieur dudit premier volume de moulage (V1) et configurés pour définir, dans ladite première couche (11), des canaux ou des cavités de remplissage (19) corrélés à la forme et à la position des arêtes (40b) de ladite seconde surface de moulage (35).

6. Appareil selon la revendication 5, **caractérisé en ce que** les arêtes de moulage (40b) de ladite seconde matrice (34) ont une forme corrélée à la forme desdits reliefs de moulage (38) de ladite première matrice (30).

7. Appareil selon les revendications 5 ou 6, **caractérisé en ce que** ladite première matrice (30) et ladite seconde matrice (34) comprennent des premières joues de moulage (37) respectives et des secondes joues de moulage (39) qui peuvent être remplacées pour former une pluralité de finitions tridimensionnelles.

8. Composant en matière plastique, adapté pour former un corps contenant, ou un boîtier d'un appareil ménager (50), ou d'un réceptacle, comprenant :
- une première couche interne (11) en une première matière plastique, et
- une seconde couche externe (12) en une seconde matière plastique, qui recouvre au moins partiellement la première couche (11),
dans lequel la première couche (11) comprend une première surface (13) définissant une surface interne du composant (10) et faisant face, pendant l'utilisation, vers l'intérieur de l'appareil ménager (50) et une seconde surface (14), opposée à la première surface (13), sur laquelle la seconde couche (12) est positionnée en contact,
**caractérisé en ce que** ladite seconde couche (12) comprend une surface externe (15), opposée à la surface interne de la première couche (11), présentant une finition tridimensionnelle comprenant une alternance de parties saillantes (17) et de parties en retrait (18), dans lequel ladite surface externe (15) définit, pendant l'utilisation, une surface externe du composant (10), opposée à une surface interne (13) de ladite couche interne (11), définissant une surface interne du composant (10) et donc une surface externe de l'appareil ménager (50) sur lequel elle est appliquée, **et en ce que** ladite première couche (11) comprend, réalisés dans son épaisseur, des canaux ou des cavités de remplissage (19) qui sont corrélés à la forme et à la position desdites parties en retrait (18) de ladite seconde couche (12), appropriés pour compenser, au moins partiellement, la différence d'épaisseur entre lesdites parties saillantes (17) et lesdites parties en retrait (18).

9. Composant selon la revendication 8, **caractérisé en ce que** ladite première couche (11) a une première épaisseur qui varie dans une direction transversale dudit composant entre une valeur minimale (S1min) en correspondance avec lesdits canaux, ou cavités de remplissage (19) et une épaisseur maximale (S1max) en correspondance avec des parties plates (19a) qui sont intercalées avec lesdites cavités ou canaux de remplissage (19) et ladite seconde couche (12) a une seconde épaisseur (S2) sensiblement constante dans ladite direction transversale.

10. Composant selon la revendication 9, **caractérisé en ce que** ladite seconde épaisseur (S2) de ladite seconde couche externe (12) est supérieure à ladite première épaisseur (S1) de ladite première couche interne (11).

11. Composant selon l'une quelconque revendication de 8 à 10, **caractérisé en ce que** la première couche interne (11) est faite d'une première matière opaque, et la seconde couche externe (12) est faite d'une seconde matière, au moins partiellement transparente, permettant à la première couche interne opaque (11) d'être visible à travers elle.

12. Composant selon l'une quelconque des revendications 8 à 11, **caractérisé en ce que** ladite seconde couche externe (12) s'étend, au moins dans une direction axiale (X), au-delà d'un bord d'extrémité (24) de ladite première couche interne (11).

13. Composant selon l'une quelconque des revendications 8 à 12, **caractérisé en ce que** lesdites parties saillantes (17) sont configurées comme des nervures verticales adjacentes les unes aux autres et disposées sensiblement parallèlement les unes aux autres.

14. Composant selon l'une quelconque des revendications 8 à 13, **caractérisé en ce qu'**il présente une forme tubulaire.

15. Appareil ménager, tel qu'une bouilloire (50A) ou un grille-pain (50B), **caractérisé en ce qu'**il comprend un corps contenant, ou un boîtier, au moins en partie réalisé avec un composant (10) selon l'une quelconque des revendications 8 à 13.
